# FASCICULE DE BREVET EUROPEEN

(11) **EP 3 465 044 B1**
(45) Date de publication et mention de la délivrance du brevet: **09.09.2020**
(21) Numéro de dépôt: 17733880.3
(22) Date de dépôt: 05.06.2017
(51) Int. Cl.: F28D 1/03, F28D 20/02

(54) **ECHANGEUR THERMIQUE COMPORTANT DES MOYENS D'AMORTISSEMENT DE VARIATIONS DE TEMPERATURE**
WÄRMETAUSCHER MIT MITTEL VORRICHTUNG ZUR VERRINGERUNG VON TEMPERATURSCHWANKUNGEN
HEAT EXCHANGER COMPRISING MEANS FOR MITIGATING VARIATIONS IN TEMPERATURE

(30) Priorité: 06.06.2016 FR 1655144
(43) Date de publication de la demande: 10.04.2019
(73) Titulaire: Valeo Systemes Thermiques, 78320 Le Mesnil Saint Denis (FR)
(72) Inventeur: AZZOUZ, Kamel, 78322 Le Mesnil Saint Denis Cedex (FR); FERLAY, Benjamin, 78322 Le Mesnil Saint Denis Cedex (FR)
(74) Mandataire: Tran, Chi-Hai
(86) Numéro de dépôt international: PCT/FR2017/051411
(87) Numéro de publication internationale: WO 2017/212155

(56) Documents cités:
- EP-A1- 2 980 518
- EP-A1- 2 993 435
- EP-A1- 3 002 538
- EP-A1- 3 002 538
- KR-A- 20160 013 088
- NL-C- 2 007 209

## Description

L'invention concerne un échangeur thermique, dans lequel circulent des fluides échangeant de la chaleur entre eux. L'invention concerne plus particulièrement un échangeur thermique suivant le préambule de la revendication 1.

Les échangeurs thermiques de ce type ont pour fonction d'assurer un échange thermique entre deux fluides circulant. Un échangeur thermique permet donc de refroidir ou de réchauffer un premier fluide, par exemple de l'air, par échange thermique avec un second fluide caloporteur. En fonction de la nature des fluides, l'échangeur thermique peut être de type air/air ou air/liquide. La performance thermique d'un échangeur air/liquide est habituellement supérieure à celle d'un échangeur air/air, en raison du liquide caloporteur qui sera sélectionné de manière à avoir une capacité thermique supérieure à celle de l'air.

Dans le domaine de l'industrie automobile, la gestion thermique, ou le pilotage des flux thermiques et énergétiques des véhicules, a pour objectif d'optimiser la température moteur à chaque étape de fonctionnement du véhicule ainsi que le chauffage et le refroidissement des zones de l'habitacle. Pour y parvenir, des dispositifs complexes de contrôle et de régulation de la température sont utilisés.

Dans le domaine particulier des moteurs thermiques des véhicules automobiles, la gestion thermique de l'air de suralimentation est obtenue par fonctionnement d'un échangeur thermique air/liquide appelé «refroidisseur d'air de suralimentation» ou « RAS », également connu sous la dénomination « Water Charged-Air Cooler » en anglais, ou « WCAC ». L'air de suralimentation échauffé par la compression est refroidi par action d'un liquide caloporteur réfrigérant avant son admission dans les cylindres du moteur. Toutefois, en phase de démarrage à froid du moteur, il peut être nécessaire de réchauffer l'air de suralimentation du moteur avant son admission au moteur. Dans ce cas, le fonctionnement de l'échangeur thermique est inversé. Il n'est alors plus utilisé pour refroidir mais pour chauffer l'air de suralimentation grâce au fluide caloporteur chauffé via une boucle thermique de chauffage.

Le pilotage de plusieurs températures d'état d'un fluide caloporteur, selon les applications qui doivent être mises en œuvre, engendre de nombreuses et différentes variations de température. Ces phénomènes thermiques, appelés chocs thermiques, soumettent les échangeurs thermiques à des contraintes mécaniques fortes. Dans le cas des échangeurs thermiques à plaques, comprenant un faisceau d'échange de chaleur constitué par une multiplicité de plaques empilées, les changements rapides de températures des fluides mis en jeu génèrent des élongations différentielles au sein d'une plaque ou d'un ensemble de plaques. Ces élongations entrainent une fatigue progressive du matériau constituant les plaques pouvant aller jusqu'à sa rupture et provoquant ainsi la fuite vers l'extérieur du fluide caloporteur contenu dans la plaque.

Le document EP 2993 435 A1 décrit un échangeur thermique selon le préambule de la revendication 1.

L'invention a pour objectif de réaliser un échangeur thermique qui remédie aux inconvénients précités. A cet effet, l'invention propose un échangeur thermique capable d'amortir de fortes variations de température en limitant les pics et/ou gradients de températures. Ces problèmes sont résolus par les caractéristiques de la partie caractérisante.

L'invention a ainsi pour objet un échangeur thermique selon la revendication 1.

Le moyen de stockage thermique, formant moyen d'amortissement de variations de température, peut comprendre un carter réalisé dans un matériau conducteur thermique, de préférence métallique, dont les parois délimitent une chambre interne creuse, ladite chambre interne étant remplie dudit matériau à changement de phase. On pourra notamment prévoir que le matériau conducteur thermique utilisé pour réaliser le carter du moyen de stockage thermique est de l'aluminium.

On prévoit que le carter de réception du matériau à changement de phase est agencé relativement aux plaques du faisceau d'échange thermique, à au moins l'une des extrémités desdites plaques, selon leur direction d'allongement.

Selon une caractéristique de l'invention, le carter de réception du matériau à changement de phase est avantageusement agencé à au moins l'une des extrémités du faisceau d'échange thermique de manière à échanger des calories avec le second fluide caloporteur.

Selon une autre caractéristique de l'invention, on pourra prévoir que le moyen de stockage thermique est en contact thermique direct avec une ou plusieurs plaques du faisceau d'échange thermique.

Ledit dispositif peut en outre comporter une ou plusieurs caractéristiques suivantes, prises séparément ou en combinaison :
- le moyen de stockage thermique est formé par une des parois du cadre de réception du faisceau d'échange thermique, et notamment par une paroi d'extrémité longitudinale du cadre de réception du faisceau d'échange thermique ;
- le moyen de stockage thermique est formé dans un montant réalisé distinctement du cadre de réception du faisceau d'échange thermique, sur l'une des parois duquel le montant est rapporté et fixé au voisinage d'au moins une des plaques ;
- ledit matériau à changement de phase peut comporter un matériau comprenant des composés inorganiques tels qu'un alliage de sels organiques et d'eau ;
- ledit matériau à changement de phase peut comporter un matériau comprenant des composés organiques tels que les paraffines et les acides gras ;
- ledit matériau à changement de phase peut comporter un matériau comprenant des composés eutectiques ;
- ledit matériau à changement de phase peut comporter un matériau comprenant des composés d'origine végétale ;
- ledit matériau à changement de phase est intégré à ladite chambre interne sous forme liquide ;
- ledit matériau à changement de phase est intégré à ladite chambre interne sous forme matériau composite polymérisé, notamment sous forme de feuille ;
- la température de changement de phase dudit matériau à changement de phase est comprise entre 50°C et 100°C ;
- la température critique de changement de phase du matériau à changement de phase est de 70°C ;
- la vitesse d'absorption et de restitution de chaleur du matériau à changement de phase est comprise entre 30 et 180 secondes ;

D'autres caractéristiques et avantages de l'invention apparaitront plus clairement à la lecture de la description suivante, donnée à titre d'exemple illustratif et non limitatif, et des dessins annexés parmi lesquels :
- la figure 1 est une vue en perspective des différents composants d'un échangeur thermique selon un premier mode de réalisation de l'invention, dans lequel des moyens d'amortissement de variation de température sont disposés dans une paroi d'extrémité d'un cadre de réception d'un faisceau d'échange thermique ;
- la figure 2 est une vue latérale de l'échangeur thermique de la figure 1, rendant particulièrement visible la formation du faisceau d'échange thermique par une multiplicité de plaques empilées et d'ailettes intercalées entre ces plaques ;
- la figure 3 est un détail de la figure 2 représentant de façon schématique une zone critique d'un échangeur thermique, dans lequel les plaques sont susceptibles de rupture lors de variations rapides de températures des fluides, lesdits moyens d'amortissement de variation de température étant agencés dans cette zone critique.
- et la figure 4 est une vue latérale similaire à celle de la figure 2 illustrant une variante de réalisation dans laquelle les moyens d'amortissement de variations de température sont agencés dans une autre zone de l'échangeur thermique correspondant.

Dans ces figures, les éléments sensiblement identiques portent les mêmes références.

L'invention concerne un échangeur thermique dans lequel est agencé au moins un moyen d'amortissement de variations de température, formé d'un moyen de stockage thermique comprenant au moins un matériau à changement de phase.

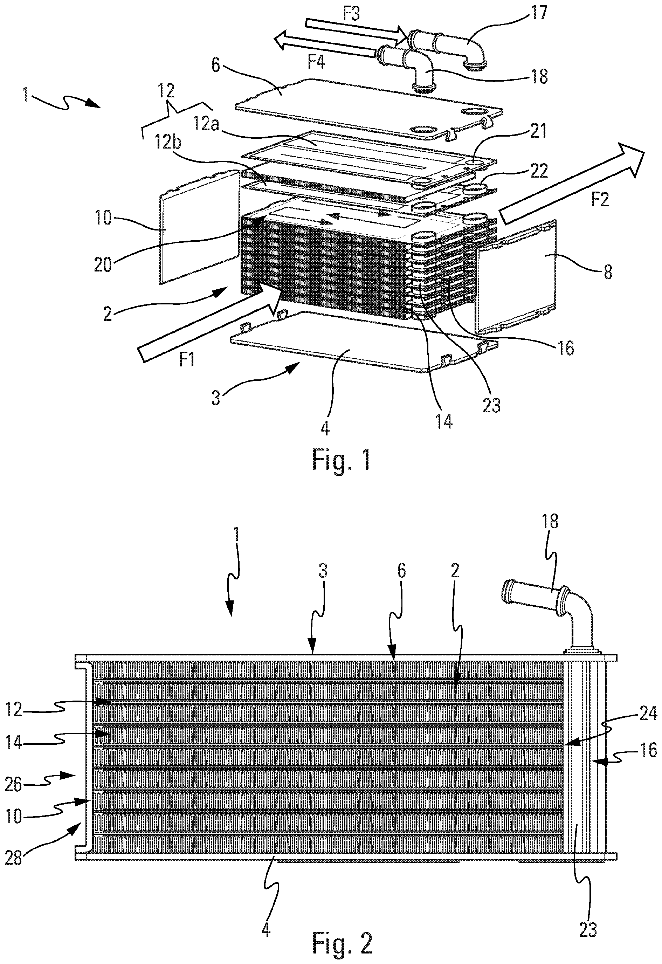

On a représenté sur la figure 1 un premier exemple de réalisation d'un échangeur thermique à plaques 1, dans lequel un faisceau d'échange thermique 2 est agencé à l'intérieur d'un cadre de réception 3 prenant la forme d'une boîte définie par une paroi inférieure 4, une paroi supérieure 6, et deux parois latérales d'extrémité, une paroi d'extrémité proximale 8 et une paroi d'extrémité distale 10 reliant entre elles lesdites parois inférieure et supérieure à leurs extrémités longitudinales en regard.

Le faisceau d'échange thermique 2 comporte une multiplicité de plaques 12 et d'ailettes 14 empilées en alternance, les ailettes 14 formant des passages dans l'empilement des plaques 12 pour que l'air puisse traverser ledit faisceau.

Le cadre de réception 3 recouvre au moins partiellement ledit faisceau d'échange thermique 2. La paroi supérieure 6 et la paroi inférieure 4 du cadre de réception 3 s'étendent en regard, parallèlement à la direction d'allongement des plaques 12 lorsque le faisceau 2 est logé dans le cadre, depuis un collecteur 16 dans lequel débouchent des conduites d'entrée/sortie 17 et 18 de fluide permettant respectivement l'admission du liquide dans le faisceau d'échange thermique 2 et la sortie de ce liquide après sa circulation d'une plaque à l'autre. Ce cadre 3 est ouvert latéralement pour laisser passage à de l'air que l'on souhaite réchauffer ou refroidir par échange thermique avec du liquide circulant d'une plaque à l'autre 12. A cet effet, les plaques sont formées de deux feuilles 12a, 12b (visibles sur la figure 1) disposées en regard l'une de l'autre et définissant entre elles un circuit d'entrainement interne 20 du liquide entre une colonne et l'autre, le liquide courant à l'intérieur de la plaque d'une extrémité longitudinale à l'autre, tel qu'illustré sur la plaque supérieure de l'empilement représenté en figure 1. Les plaques 12 sont chacune portées à une extrémité longitudinale par la paroi d'extrémité distale 10 et à l'extrémité longitudinale opposée par la paroi d'extrémité proximale 8. Les plaques comportent chacune une paire d'orifices 21 bordés respectivement d'une collerette 22 s'étendant en s'éloignant de la face correspondante de la plaque, lesdites plaques étant empilées de sorte que la jonction des collerettes 22 forment deux colonnes 23 de circulation de liquide disposées dans le prolongement des conduites d'entrée/sortie 17 et 18, le liquide circulant alternativement dans les colonnes de circulation 23 et à l'intérieur des plaques.

On comprend que les ailettes 14 forment des premiers canaux de circulation permettant le passage du premier fluide, notamment de l'air, à travers l'échangeur thermique tandis que les plaques 12 et leurs circuits d'entraînement 20 définissent des seconds canaux de circulation du second fluide caloporteur à l'intérieur du faisceau d'échange thermique. Dans le cas où l'échangeur thermique 1 est un échangeur dit « air-eau » de type WCAC, c'est-à-dire un échangeur dans lequel le premier fluide, de l'air, échange de la chaleur avec le second fluide caloporteur, de l'eau, appliqué à un refroidisseur d'air de suralimentation, l'eau est de préférence de l'eau du circuit de refroidissement, typiquement de l'eau glycolée.

Ce sont les zones aux extrémités longitudinales de la plaque, à savoir la zone 24, appelée « tête de plaque» et la zone 26, appelée « pied de plaque » qui représentent les zones de fragilité des plaques 12 en cas de brusques variations de température du liquide circulant le long de ces plaques.

Tel qu'illustré sur la figure 1, le premier fluide, tel que l'air, traverse les premiers canaux formés par les ailettes 14 dans le sens transversal du faisceau d'échange thermique 2 (flèches F1 et F2) et le second fluide, arrivant dans l'échangeur par la conduite d'entrée 17 (flèche F3) et sortant de l'échangeur par la conduite de sortie 18 (flèche F4), circule le long des seconds canaux principalement longitudinalement, du collecteur 16 à la paroi d'extrémité distale opposée 10. La circulation des deux fluides s'effectue ainsi à courants croisés. Lorsque l'on souhaite refroidir de l'air chaud arrivant dans l'échangeur (flèche F1) pour qu'il ressorte froid (flèche F2), on amène dans l'échangeur un liquide froid (flèche F3) qui ressort chaud (flèche F4).

Les ailettes de perturbation 14 formant les premiers canaux participent à la perturbation de l'écoulement de l'air à travers l'échangeur et à l'augmentation de la surface d'échange. Les échanges thermiques entre le premier fluide et le second fluide caloporteur se font au travers des feuilles formant les plaques 12. A titre d'exemple, l'épaisseur d'une de ces plaques peut être de l'ordre de 0,5mm.

L'échangeur thermique 1 comporte en outre au moins un moyen de stockage thermique 28 formant un moyen d'amortissement de variations de température. Ledit moyen de stockage thermique 28 est formé dans ce premier mode de réalisation au niveau de la paroi d'extrémité distale 10 du cadre de réception 3, c'est-à-dire la paroi d'extrémité opposée aux tubulures d'entrée 17 et de sortie 18, ladite paroi associée au moyen de stockage thermique 28 étant rendue creuse pour délimiter une chambre interne 30 remplie d'au moins un matériau à changement de phase. La paroi d'extrémité distale 10 forme ainsi un carter de réception d'un matériau à changement de phase.

Selon l'invention, les fortes variations de température pouvant apparaitre au sein de l'échangeur thermique 1, plus précisément aux extrémités longitudinales des plaques 12 du faisceau d'échange thermique 2, sont amorties par l'action du matériau à changement de phase inséré dans la chambre interne 30 du moyen de stockage thermique 28. Les « Matériaux à Changement de Phase » ou « MCP », également connu sous la dénomination « Phase Change Material » en anglais, ou « PCM », ont la particularité de pouvoir stocker l'énergie sous forme de calories à mesure qu'ils changent de phase. Selon l'invention, le matériau à changement de phase MCP est choisi de manière à présenter, dans la plage de températures obtenues au sein de l'échangeur thermique, une transition solide-liquide. Lorsque le matériau à changement de phase atteint, après avoir été chauffé ou refroidi selon sa température initiale, sa température de changement de phase, il emmagasine ou restitue de l'énergie relativement à son environnement proche. Lorsque sa température augmente pour atteindre la température de changement de phase, et donc pour passer d'un état solide à liquide dans l'exemple décrit, le matériau à changement de phase absorbe une quantité de chaleur déterminée, fonction de sa masse et de la caractéristique, propre à chaque matériau, de chaleur latente. A l'inverse, lorsque la température doit baisser pour atteindre la température de changement de phase, et donc pour passer d'un état liquide à un état solide, le matériau à changement de phase se transforme en restituant l'énergie préalablement stockée.

Dans le mode de réalisation illustré, ladite chambre interne 30 remplie de matériau à changement de phase est formée directement dans une paroi, et notamment dans la paroi d'extrémité distale 10, du cadre de réception 3 du faisceau 2 d'échange thermique, de sorte qu'au moins un bord délimitant cette chambre est en contact thermique direct avec les plaques 12 du faisceau d'échange thermique 2. De la sorte, l'échange thermique entre les plaques et le matériau à changement de phase est particulièrement efficace et rapide dans le temps. La paroi du carter de réception directement en contact avec les plaques est avantageusement munie de moyens de réception desdites plaques, ici non visibles sur les figures.

On comprendra que sans sortir du contexte de l'invention, on pourra prévoir que le carter soit distinct de la paroi d'extrémité distale, la chambre interne étant formée par évidement d'un montant jouant le rôle du carter et rapporté contre cette paroi d'extrémité distale, soit à l'intérieur du cadre de réception du faisceau d'échange thermique de manière à être en contact direct avec les plaques à l'intérieur desquelles circule le fluide caloporteur, soit à l'extérieur du cadre de réception. Cette dernière variante, dans lequel l'amortissement des variations de température se fait par une conduction thermique indirecte entre le matériau à changement de phase et les plaques, est notamment particulièrement facile à mettre en œuvre.

On va maintenant décrire un exemple d'application d'un échangeur thermique 1 dans son application dans laquelle de l'eau à très haute température est amenée à circuler dans les plaques de l'échangeur pour réchauffer l'air passant à travers les ailettes de l'échangeur. L'eau, qui forme le second fluide caloporteur, est portée à très haute température, à titre d'exemple 180°, et au moins à une température supérieure à la température de fusion du matériau à changement de phase utilisé dans le moyen de stockage thermique 28. Le moyen de stockage thermique 28 contenant le matériau à changement de phase échange, par conduction thermique directe, des calories avec ledit fluide caloporteur haute température circulant dans le faisceau de plaques. Le matériau à changement de phase, contenu dans la chambre interne 30 du moyen de stockage thermique 28, est ainsi réchauffé jusqu'à ce qu'il arrive à sa température de changement de phase solide-liquide et qu'il fonde. Au cours de cette transformation solide-liquide, le matériau à changement de phase absorbe de la chaleur dans une phase de stockage de calories. Ainsi, une partie de l'énergie calorifique du liquide est absorbée par le matériau à changement de phase lors de l'augmentation de température du liquide et le moyen de stockage thermique 28 ne restitue pas les calories délivrées par le fluide caloporteur. Le pic de chaleur est ainsi lissé et le traumatisme sur les plaques 12, notamment à leurs extrémités longitudinales, en est diminué. Si la température du liquide caloporteur en est trop fortement réduite, et notamment si la température du fluide caloporteur est à une température inférieure à la température de fusion du matériau à changement de phase, une phase de restitution de calories pourra être générée dans laquelle l'énergie latente emmagasinée sous forme de chaleur par le matériau à changement de phase est déstockée vers le liquide caloporteur présent dans l'extrémité des plaques directement au contact du moyen de stockage thermique. Dans cette phase de restitution, le changement d'état de phase du matériau à changement de phase correspond à une solidification du matériau. Ces boucles de stockage et déstockage d'énergie amortissent les variations de température par lissage des celles-ci et limitent ainsi les pics et gradients de température.

Selon un exemple choisi, le matériau à changement de phase peut être choisi parmi l'un de ces matériaux pris seuls ou en combinaison :
- composés inorganiques tels qu'un alliage de sels organiques et d'eau,
- composés organiques tels que les paraffines et les acides gras,
- composés eutectiques,
- composés d'origine végétale.

La plage de température de changement de phase du matériau à changement de phase peut notamment être de l'ordre de 50°C à 100°C, et il est intéressant dans le mode d'application ici décrit de prévoir une température de changement de phase du MCP égale à 70°C.

On comprend que cette température critique de changement de phase peut varier d'une application à l'autre sans sortir du contexte de l'invention, et que la valeur de 70°C n'est ici donnée qu'à titre d'exemple. Il convient par contre de noter que le matériau à changement de phase peut être en outre caractérisé par la vitesse d'absorption et de restitution de l'énergie, et qu'il peut être intéressant pour le type d'application automobile évoquée que cette vitesse d'absorption et de restitution de chaleur du matériau à changement de phase soit comprise entre 30 et 180 secondes. Une telle valeur permet ainsi une grande réactivité aux variations de température du fluide caloporteur, qui peut être amené à varier fréquemment en fonction des besoins de gestion thermique du véhicule.

On va décrire maintenant un procédé de fabrication de l'échangeur thermique selon l'invention. Ledit procédé comprend une première étape de réalisation du moyen de stockage thermique 28. Dans la suite, on va décrire plus particulièrement la réalisation d'un carter, avec une chambre interne logeant le matériau à changement de phase, directement formé dans une paroi du cadre de réception de l'échangeur thermique. On saura facilement adapter cette première étape pour la réalisation éventuelle d'un carter prenant la forme d'un montant indépendant portant cette chambre interne et rapporté par la suite sur la paroi associée du cadre.

Dans cette première étape, on forme une chambre interne 30 à l'intérieur de la paroi d'extrémité distale 10, par exemple par assemblage de deux pièces embouties. Le carter est réalisé dans un matériau conducteur, de préférence en aluminium. On cherche ainsi à faciliter l'échange de chaleur entre le fluide caloporteur, circulant dans les plaques 12 du faisceau d'échange thermique 2, et le matériau à changement de phase logé à l'intérieur du carter. La chambre interne 30 présente une forme et un volume définis en fonction de l'application, des dimensions de l'échangeur thermique 1 et du besoin d'atténuation du choc thermique au sein dudit échangeur thermique, c'est-à-dire en fonction de la quantité de matériau de changement de phase à prévoir pour amortir les variations de température du liquide caloporteur.

Le carter possède, sur au moins l'une des pièces embouties le formant, au moins un orifice permettant l'introduction du matériau à changement de phase dans la chambre interne 30 creuse.

Tel que cela a pu être envisagé précédemment, dans la variante où la chambre interne est agencée dans un carter formé par un montant indépendamment réalisé, le carter est assemblé sur la paroi d'extrémité distale par brasage sur le cadre de réception 3 du faisceau d'échange thermique 2.

Dans des étapes ultérieures, on procède au remplissage de la chambre interne 30 creuse du moyen de stockage thermique 28.Le matériau à changement de phase MCP y est déposé par l'intermédiaire de la zone ajourée définissant l'orifice de remplissage. Il convient ensuite de sceller l'orifice de remplissage, par collage ou bien par vissage d'un capot.

La description qui précède vise à expliquer comment l'invention permet d'atteindre les objectifs qu'elle s'est fixés et notamment de proposer un échangeur thermique dans lequel les variations trop fortes et trop brusques de température sont amorties par des moyens embarqués sur l'échangeur thermique, simples à fabriquer, simples à monter et particulièrement efficaces.

Toutefois, l'invention n'est pas limitée aux seuls échangeurs thermiques conformes aux modes de réalisation explicitement décrits en regard des figures 1 à 3. A titre d'exemple, on pourra, sans sortir de la portée de l'invention, modifier le lieu d'implantation du moyen de stockage thermique amortisseur de variations de température.

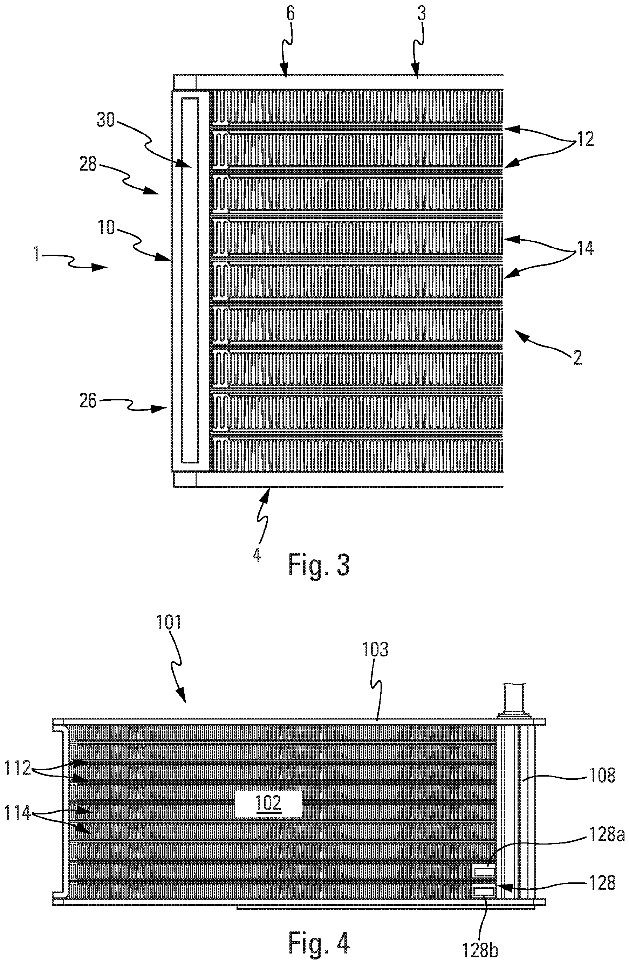

On a illustré sur la figure 4 une telle variante de réalisation d'un échangeur thermique 101, dans laquelle le moyen de stockage thermique 128 est ici logé à proximité de la paroi d'extrémité proximale 108 du cadre de réception 103, sur au moins une portion de la hauteur du faisceau d'échange thermique 102 et du cadre de réception associé, entre cette paroi d'extrémité proximale 108 et au moins l'une des plaques 112. Tel qu'illustré, ce moyen de stockage thermique 128 peut prendre la forme de différents carters 128a, 128b prévus entre les plaques, pour prendre partiellement la place des ailettes d'échange thermique 114. On pourrait également prévoir un seul carter s'étendant en hauteur en regard de plusieurs plaques qui peuvent alors être fixées directement sur le moyen de stockage. Conformément à l'invention, le matériau de changement de phase MCP logé dans le ou les carters 128a,128b permet d'amortir par stockage puis restitution de calories les variations de température du fluide caloporteur circulant à l'intérieur des plaques.

## Revendications

1. Echangeur thermique (1) comportant au moins un faisceau d'échange thermique (2) entre un premier fluide, tel que l'air, et un second fluide caloporteur, tel que du liquide, et un cadre de réception (3) du faisceau d'échange thermique recouvrant au moins partiellement ledit faisceau d'échange thermique, ledit faisceau comportant une multiplicité de plaques (12) formant parties d'un conduit de circulation dudit second fluide caloporteur, les plaques étant empilées avec un espacement entre deux plaques voisines de manière à laisser passage audit premier fluide traversant le faisceau, comportant au moins un moyen de stockage thermique (28, 128) formant moyen d'amortissement de variations de température et configuré pour loger un matériau à changement de phase au voisinage d'une des plaques (12) du faisceau d'échange thermique (2), et **caractérisé en ce que** le moyen de stockage thermique (28, 128), formant moyen d'amortissement de variations de température, comprend un carter de réception réalisé dans un matériau conducteur thermique, de préférence métallique, dont les parois délimitent une chambre interne creuse (30), ladite chambre interne étant remplie dudit matériau à changement de phase.

2. Echangeur thermique selon la revendication précédente, **caractérisé en ce que** le matériau conducteur thermique utilisé pour réaliser le carter du moyen de stockage thermique (28, 128) est de l'aluminium.

3. Echangeur thermique selon l'une quelconque des revendications 1 ou 2, **caractérisé en ce que** le matériau à changement de phase est intégré à ladite chambre interne (30) sous forme liquide ou sous forme de matériau composite polymérisé.

4. Echangeur thermique selon l'une des revendications précédentes, **caractérisé en ce que** le moyen de stockage thermique (28, 128) est agencé relativement aux plaques (12) du faisceau d'échange thermique (2), à au moins l'une des extrémités desdites plaques (12), selon leur direction d'allongement.

5. Echangeur thermique selon l'une des revendications précédentes, **caractérisé en ce que** le moyen de stockage thermique (28, 128) est en contact thermique direct avec au moins l'une des plaques (12) du faisceau d'échange thermique (3).

6. Echangeur thermique selon l'une des revendications précédentes, **caractérisé en ce que** le moyen de stockage thermique (28, 128) est formé par l'une des parois du cadre de réception (3) du faisceau d'échange thermique (2).

7. Echangeur thermique selon l'une des revendications 1 à 5, **caractérisé en ce que** le moyen de stockage thermique (28, 128) est formé dans un montant réalisé distinctement du cadre de réception du faisceau d'échange thermique (2) et rapporté sur l'une des parois de ce cadre de réception (3).

8. Echangeur thermique selon l'une quelconque des revendications précédentes, **caractérisé en ce que** la température de changement de phase dudit matériau à changement de phase est comprise entre 50°C et 100°C.

9. Echangeur thermique selon l'une quelconque des revendications précédentes, **caractérisé en ce que** la vitesse d'absorption et de restitution de chaleur du matériau à changement de phase est comprise entre 30 et 180 secondes.

10. Echangeur thermique selon l'une quelconque des revendications précédentes, **caractérisé en ce que** ledit matériau à changement de phase est un matériau comprenant des composés organiques tels que les paraffines et les acides gras.

11. Echangeur thermique selon l'une quelconque des revendications précédentes, **caractérisé en ce que** ledit matériau à changement de phase est un matériau comprenant des composés d'origine végétale.

## Patentansprüche

1. Wärmetauscher (1), welcher wenigstens ein Rohrbündel zum Wärmeaustausch (2) zwischen einem ersten Fluid, wie etwa Luft, und einem zweiten Wärmeträgerfluid, wie etwa einer Flüssigkeit, und einen Aufnahmerahmen (3) für das Wärmeaustauschrohrbündel, der das Wärmeaustauschrohrbündel wenigstens teilweise bedeckt, aufweist, wobei das Rohrbündel eine Vielzahl von Platten (12) aufweist, die Teile einer Zirkulationsleitung des zweiten Wärmeträgerfluids bilden, wobei die Platten mit einem Abstand zwischen zwei benachbarten Platten gestapelt sind, so dass ein Durchlass für das durch das Rohrbündel strömende erste Fluid verbleibt,
und welcher wenigstens ein Wärmespeichermittel (28, 128) aufweist, das ein Mittel zur Verringerung von Temperaturschwankungen bildet und dafür ausgelegt ist, ein Phasenwechselmaterial in der Nähe einer der Platten (12) des Wärmeaustauschrohrbündels (2) aufzunehmen, und
**dadurch gekennzeichnet, dass** das Wärmespeichermittel (28, 128), das ein Mittel zur Verringerung von Temperaturschwankungen bildet, ein aus einem wärmeleitenden, vorzugsweise metallischen Material hergestelltes Aufnahmegehäuse umfasst, dessen Wände eine hohle Innenkammer (30) begrenzen, wobei die Innenkammer mit dem Phasenwechselmaterial gefüllt ist.

2. Wärmetauscher nach dem vorhergehenden Anspruch, **dadurch gekennzeichnet, dass** das wärmeleitende Material, das zur Herstellung des Gehäuses des Wärmespeichermittels (28, 128) verwendet wird, Aluminium ist.

3. Wärmetauscher nach einem der Ansprüche 1 oder 2, **dadurch gekennzeichnet, dass** das Phasenwechselmaterial in flüssiger Form oder in Form von polymerisiertem Verbundmaterial in die Innenkammer (30) integriert ist.

4. Wärmetauscher nach einem der vorhergehenden Ansprüche, **dadurch gekennzeichnet, dass** das Wärmespeichermittel (28, 128) relativ zu den Platten (12) des Wärmeaustauschrohrbündels (2) an wenigstens einem der Enden der Platten (12), in deren Längsrichtung gesehen, angeordnet ist.

5. Wärmetauscher nach einem der vorhergehenden Ansprüche, **dadurch gekennzeichnet, dass** sich das Wärmespeichermittel (28, 128) in direktem thermischem Kontakt mit wenigstens einer der Platten (12) des Wärmeaustauschrohrbündels (3) befindet.

6. Wärmetauscher nach einem der vorhergehenden Ansprüche, **dadurch gekennzeichnet, dass** das Wärmespeichermittel (28, 128) von einer der Wände des Aufnahmerahmens (3) des Wärmeaustauschrohrbündels (2) gebildet wird.

7. Wärmetauscher nach einem der Ansprüche 1 bis 5, **dadurch gekennzeichnet, dass** das Wärmespeichermittel (28, 128) von einer Stütze gebildet wird, die getrennt vom Aufnahmerahmen des Wärmeaustauschrohrbündels (2) hergestellt ist und an eine der Wände dieses Aufnahmerahmens (3) angesetzt ist.

8. Wärmetauscher nach einem der vorhergehenden Ansprüche, **dadurch gekennzeichnet, dass** die Phasenwechseltemperatur des Phasenwechselmaterials zwischen 50 °C und 100 °C liegt.

9. Wärmetauscher nach einem der vorhergehenden Ansprüche, **dadurch gekennzeichnet, dass** die Wärmeaufnahme- und Wärmeabgabegeschwindigkeit des Phasenwechselmaterials zwischen 30 und 180 Sekunden liegt.

10. Wärmetauscher nach einem der vorhergehenden Ansprüche, **dadurch gekennzeichnet, dass** das Phasenwechselmaterial ein Material ist, welches organische Verbindungen wie Paraffine und Fettsäuren umfasst.

11. Wärmetauscher nach einem der vorhergehenden Ansprüche, **dadurch gekennzeichnet, dass** das Phasenwechselmaterial ein Material ist, welches Verbindungen pflanzlichen Ursprungs umfasst.

## Claims

1. Heat exchanger (1) comprising at least one heat exchange bundle (2) for exchanging heat between a first fluid, such as the air, and a second, heat transfer fluid, such as liquid, and a receiving frame (3) for receiving the heat exchange bundle covering at least part of said heat exchange bundle, said bundle comprising a multiplicity of plates (12) forming parts of a duct for the circulation of said second heat transfer fluid, the plates being stacked with a spacing between two adjacent plates so as to allow free passage for said first fluid passing through the bundle, comprising at least one heat storage means (28, 128) forming a means for mitigating variations in temperature and configured to house a phase-change material close to one of the plates (12) of the heat exchange bundle (2), and
**characterized in that**
the heat storage means (28, 128) forming a means for mitigating variations in temperature comprises a receiving casing which is made of a thermally conductive material - preferably metallic - and of which the walls delimit a hollow internal chamber (30), said internal chamber being filled with said phase-change material.

2. Heat exchanger according to the preceding claim, **characterized in that** the thermally conductive material used to create the casing of the heat storage means (28, 128) is aluminium.

3. Heat exchanger according to either one of Claims 1 and 2, **characterized in that** the phase-change material is integrated into said internal chamber (30) in liquid form or in the form of a polymerized composite material.

4. Heat exchanger according to one of the preceding claims, **characterized in that** the heat storage means (28, 128) is arranged, relative to the plates (12) of the heat exchange bundle (2), at at least one of the ends of said plates (12), in their direction of elongation.

5. Heat exchanger according to one of the preceding claims, **characterized in that** the heat storage means (28, 128) is in direct thermal contact with at least one of the plates (12) of the heat exchange bundle (3) .

6. Heat exchanger according to one of the preceding claims, **characterized in that** the heat storage means (28, 128) is formed by one of the walls of the frame (3) for receiving the heat exchange bundle (2).

7. Heat exchanger according to one of Claims 1 to 5, **characterized in that** the heat storage means (28, 128) is formed in an upright created separately from the frame for receiving the heat exchange bundle (2), and is affixed to one of the walls of this receiving frame (3).

8. Heat exchanger according to one of the preceding claims, **characterized in that** the phase-change temperature of said phase-change material is between 50°C and 100°C.

9. Heat exchanger according to one of the preceding claims, **characterized in that** the speed of absorption and of release of heat of the phase-change material is between 30 and 180 seconds.

10. Heat exchanger according to one of the preceding claims, **characterized in that** said phase-change material is a material comprising organic compounds such as paraffins and fatty acids.

11. Heat exchanger according to one of the preceding claims, **characterized in that** said phase-change material is a material comprising compounds that are vegetable in origin.
